# EUROPÄISCHE PATENTSCHRIFT

(11) **EP 1 318 317 B1**
(45) Veröffentlichungstag und Bekanntmachung des Hinweises auf die Patenterteilung: **06.05.2004**
(21) Anmeldenummer: 02400055.6
(22) Anmeldetag: 09.12.2002
(51) Int. Cl.: F16C 11/06

(54) **Abgedichtetes Kugelgelenk**
Sealed ball-joint
Articulation à rotule étanchée

(30) Priorität: 10.12.2001 DE 20120096 U
(43) Veröffentlichungstag der Anmeldung: 11.06.2003
(73) Patentinhaber: Sachsenring Fahrzeugtechnik GmbH, 08058 Zwickau (DE)
(72) Erfinder: Strauch, Jürgen, Dipl.-Ing., 08115 Lichtentanne (DE); Wackes, Ulrich, 08115 Lichtentanne (DE)
(74) Vertreter: Rumrich, Gabriele, Dipl.-Ing.

(56) Entgegenhaltungen:
- DE-A- 10 031 150
- DE-A- 19 911 770
- DE-A- 19 921 952
- DE-A- 19 950 281
- DE-B- 1 575 437
- DE-C- 19 850 378
- DE-C- 19 910 689
- GB-A- 1 121 004
- US-A- 2 397 464
- US-A- 3 357 728

## Beschreibung

Die Erfindung betrifft ein abgedichtetes Kugelgelenk nach dem Oberbegriff des ersten Patentanspruchs, welches ein Gehäuse zur Aufnahme einer in einer Gleitschale beweglich gelagerten Kugel eines Kugelzapfens sowie einen zwischen dem Gehäuse und dem Kugelzapfen angeordneten Dichtungsbalg aufweist, dessen erster Dichtungsbalgrand an dem Gehäuse und dessen zweiter Dichtungsbalgrand an dem Schaft des Kugelzapfens abdichtend anliegt.

Bei derartigen Kugelgelenken, die beispielsweise in der Fahrzeugtechnik Anwendung finden, führt der Kugelzapfen mittels der in dem Gehäuse gelagerten Kugel Dreh- und

Winkelbewegungen aus. Die dabei verwendeten, der Abdichtung dienenden Dichtungsbalge sind auf Grund ihrer Anordnung zwischen Gehäuse und Kugelzapfen einer ständigen Dehn-, Stauch- und Drehbewegung und damit einer großen Beanspruchung ausgesetzt. Insbesondere bei großen Schwenkund Drehwinkeln ist die Belastung extrem. Es kommt häufig zu einem vorzeitigen Ausfall der Kugelgelenke auf Grund von Undichtheiten im Verbindungsbereich von Dichtungsbalg und Gehäuse bzw. von Dichtungsbalg und Kugelzapfen. Vor allem letztere Verbindung ist bei axial verstellbaren Kugelgelenken in stehender Einbaulage ein kritischer Bereich, da hier nicht das den Schaft des Kugelzapfens aufnehmende Bauteil als zusätzliche Abdichtfläche genutzt werden kann.

Zur Verbesserung der Abdichtung und damit der Vermeidung eines schnellen Verschleißes der Kugelgelenke wurden unterschiedlichste Lösungen entwickelt.

Um eine entsprechende Abdichtung im zapfenseitigen Bereich des Kugelgelenks zu gewährleisten, sind beispielsweise am Schaft des Kugelzapfens angeordnete Halte- oder Zwischenringe zur Aufnahme des Dichtungsbalgrandes vorgesehen( z.B. DE 199 10 689 C1, DE 199 11 770 A1 und DE 199 21 952 A1 oder DE 199 50 281 A1 von denen der Oberbegriff des Anspruchs 1 ausgeht).

Im Querschnitt gesehen liegt dabei üblicherweise ein Schenkel dieses Ringes in axialer Richtung am Schaft des Kugelzapfens an, während ein weiterer Schenkel in radialer Richtung vom Kugelzapfen weg führt. Der Dichtungsbalgrand wird zwischen beiden Schenkeln aufgenommen. Unterschiede bestehen bei diesen Varianten lediglich in der Ausbildung des Ringes bzw. des mit diesem in Kontakt tretenden Dichtungsbalgrandes.

Diese Lösungen bieten bereits eine verbesserte Abdichtung gegenüber den Ausführungen, bei denen der Dichtungsbalgrand beispielsweise unmittelbar an einem den Kugelzapfenschaft aufnehmenden Fahrzeugbauteil anliegt. Insbesondere bei den o.a. Einsatzbereichen mit in der Aufnahme axial verstellbaren Kugelgelenken, die zudem noch großen Schwenkund Drehwinkeln ausgesetzt sind, ist ihre Dichtwirkung aber immer noch unzuverlässig. Das ist durch die Ausbildung bzw. Anordnung des relativ schmalen Halte- oder Zwischenringes auf dem Außendurchmesser des Schaftes des Kugelzapfens bedingt. Die Handhabung bei der Montage des Dichtungsbalges ist dabei ebenfalls nicht einfach.

Einen weiteren kritischen Bereich bezüglich der Zuverlässigkeit der Abdichtung eines Kugelgelenks stellt der Dichtungsbalg selbst dar.

Die üblicherweise kugelförmigen Dichtungsbalge sind bei Winkelbewegungen des Kugelgelenks auf der einen Seite Stauch- und auf der anderen Seite Dehnbewegungen ausgesetzt. Das führt häufig zu Beschädigungen des Dichtungsbalges und damit ebenfalls zu Undichtheiten.

Deshalb wurden auch Veränderungen im Mantelbereich des Dichtungsbalges vorgenommen, mit deren Hilfe die Dichtheit des Kugelgelenks weiter verbessert werden soll.

So ist es bekannt, den Dichtungsbalg durch entsprechende Aus- bzw. Einstülpungen in seinem Mantelbereich zu verlängern, so dass bei den Bewegungen des Kugelgelenks, insbesondere auf der Seite des gedehnten Teiles des Dichtungsbalges, die Abnutzungs- bzw. Abreißgefahr vermindert wird.

Eine bekannte Lösung (DE 100 31 150) sieht beispielsweise vor, eine Aus- bzw. Einstülpung des Dichtungsbalges koaxial zur Mittelachse des Kugelzapfens anzuordnen. Dabei verläuft ein vom Gehäuse abgehender Schenkel der Ausstülpung nahezu parallel zur Mittelachse des Kugelzapfens, geht dann in eine, wieder in Richtung Gehäuse zurückgehende Einstülpung über, um schließlich mit einem Schenkel - eine S-Form vollendend - mit dem Schaft des Kugelzapfens in Verbindung zu treten.

Durch diese Ausbildung kann bei einer Winkelbewegung des Kugelzapfens der Dichtungsbalg auf der einen Seite gedehnt werden, ohne dabei Beschädigungen davonzutragen. Auf der anderen Seite wird der S-förmige Abschnitt dagegen aneinandergefaltet an den Kugelzapfen gedrückt. Dadurch ist an dieser Stelle durch die bei der Stauchbewegung entstehenden Berührungen und Reibungen ein schneller Verschleiß des Dichtungsbalges zu erwarten.

In der DE 198 50 378 C1 wird ein Kugelgelenk mit einem Dichtungsbalg beschrieben, der eine vom Kugelzapfen weg führende Ausstülpung unmittelbar im Anschluss an den am Schaft befestigten Dichtungsbalgrand aufweist.

Hier ist auch im Falle der Stauchbewegung der Dichtungsbalg vom Kugelzapfen weg gerichtet. Die Anordnung der Ausstülpung des Dichtungsbalges im schaftseitigen Bereich des Kugelzapfens hat aber den Nachteil, dass dort nur ein sehr eingeschränkter Platz für den Dichtungsbalg vorhanden ist. Es besteht dadurch die Gefahr, dass es bei Bewegungen des Gelenks zu Reibungen des Dichtungsbalges mit benachbarten Flächen, beispielsweise mit dem den Schaft des Kugelzapfens aufnehmenden Fahrzeugteil kommt, und damit ebenfalls ein schneller Verschleiß herbeigeführt wird.

Der Erfindung liegt die Aufgabe zugrunde, eine Abdichtung für ein gattungsgemäßes Kugelgelenk zu entwickeln, welche auch bei axial verstellbaren Kugelgelenken und bei großen Schwenk- und Drehwinkeln eine zuverlässige Dichtheit gewährleistet und zudem eine einfache Handhabung bei der Montage ermöglicht.

Erfindungsgemäß ist auf dem Schaft des Kugelzapfens ein festsitzendes und diesen hülsenförmig umschließendes Verbindungselement angeordnet, dessen gehäuseseitiges, flanschartig ausgebildetes Ende im Querschnitt gesehen annähernd eine in Richtung zum Gehäuse geöffnete L-Form aufweist, an deren Innenkontur der am Schaft des Kugelzapfens befestigte Dichtungsbalgrand abdichtend anliegt. Dabei weist der Dichtungsbalg wenigstens eine, sich an den gehäuseseitigen Dichtungsbalgrand anschließende, vom Kugelzapfen weg gerichtete Ausstülpung auf.

Das annähernd L-förmig ausgebildete Ende des Verbindungselementes besteht aus einem annähernd koaxial zur Mittellinie des Kugelzapfens sowie zu diesem beabstandet in Richtung zum Gehäuse verlaufenden Axialschenkel und einem annähernd radial verlaufenden Radialschenkel.

Eine über einem in bekannter Weise der Befestigung des Dichtungsbalges dienenden Spannring vorhandene Materialwulst des auf dem Außendurchmesser des Schaftes befestigten Dichtungsbalgrandes liegt in axialer Richtung an dem Radialschenkel und in radialer Richtung an dem Axialschenkel des Verbindungselementes an.

Der Dichtungsbalg weist wenigstens eine zweite, sich an den schaftseitigen Dichtungsbalgrand anschließende, vom Kugelzapfen weg gerichtete Ausstülpung auf, wobei der radiale Abstand der ersten Ausstülpung zur Mittelachse des Kugelzapfens größer ist als der radiale Abstand der zweiten Ausstülpung zur Mittelachse des Kugelzapfens.

Der radiale Abstand der ersten, gehäuseseitigen Ausstülpung zur Mittelachse des Kugelzapfens ist ebenfalls größer als der radiale Abstand zur Mittelachse der Außenwand des Gehäuses im Punkt der Befestigung des gehäuseseitigen Dichtungsbalgrandes. In axialer Richtung des Kugelzapfens gesehen befindet sich die erste Ausstülpung des Dichtungsbalges annähernd auf der Höhe des dem Schaft zugewandten Randbereiches des Gehäuses.

Dabei ist sie annähernd U-förmig ausgebildet mit in Richtung zum Kugelzapfen geöffneten Schenkeln. Das Verbindungselement reicht mit seinem dem Gehäuse abgewandten Ende wenigstens bis zum gehäuseabgewandten Ende des Schaftes des Kugelzapfens.

Der Axialschenkel des gehäuseseitigen Endes des Verbindungselementes ist als eine in Richtung zum Gehäuse gekröpfte Tropfkante ausgebildet.

Das Verbindungselement kann über eine Pressverbindung oder durch Aufspritzen mit dem Kugelzapfen verbunden sein.

Auf seinem den Schaft des Kugelzapfens umgreifenden, hülsenartigen Umfang weist das Verbindungselement eine der

Aufnahme einer Verdrehsicherung des Verbindungselementes gegenüber dem Kugelzapfen dienende Ausnehmung auf.

Außerdem besitzt das Verbindungselement an seinem dem Gehäuse abgewandten Ende eine integrierte Montagehilfe.

Als zusätzliche radiale Abdichtung ist zwischen dem Außendurchmesser des Schaftes des Kugelzapfens und dem Innendurchmesser des Verbindungselementes ein an sich bekannter Rundring eingelegt.

Vorzugsweise besteht das Verbindungselement aus Stahl oder aus Kunststoff.

Die Erfindung wird nachfolgend anhand eines Ausführungsbeispieles und zugehöriger Zeichnung näher erläutert.

Es zeigen:

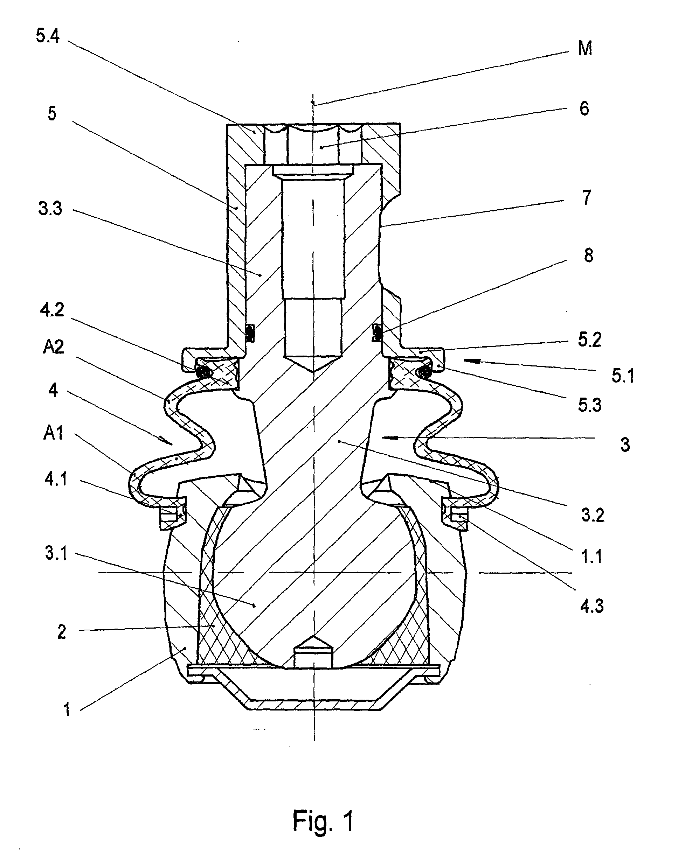

- Fig. 1 einen Längsschnitt durch die erfindungsgemäße Abdichtung für ein Kugelgelenk, das vorzugsweise in stehender Stellung eingesetzt wird, mit einem Kugelzapfen, dessen Kugel sich unten und dessen Schaft sich oben befindet und

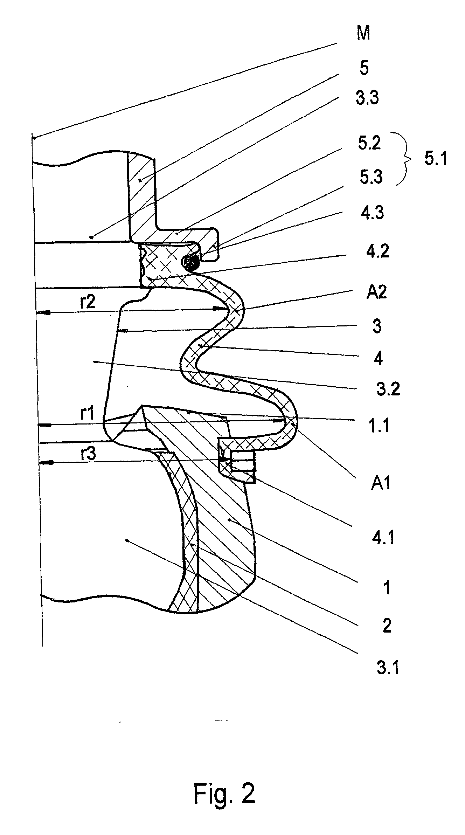

- Fig. 2 einen Ausschnitt aus Fig. 1.

Das Kugelgelenk weist ein Gehäuse 1 zur Aufnahme einer in einer Gleitschale 2 beweglich gelagerten Kugel 3.1 eines Kugelzapfens 3 auf. An die Kugel 3.1 schließt sich nach einem Übergangsbereich 3.2 ein Schaft 3.3 des Kugelzapfens 3 an, der dabei aus einer am Randbereich 1.1 des Gehäuses 1 befindlichen Öffnung ragt.

Außerdem ist ein Dichtungsbalg 4 mit seinem ersten Dichtungsbalgrand 4.1 am Gehäuse 1 und mit seinem zweiten Dichtungsbalgrand 4.2 am Außendurchmesser des Schaftes 3.3 des Kugelzapfens 3 befestigt. In bekannter Weise wird der Dichtungsbalg 4 durch Spannringe 4.3 am Gehäuse 1 bzw. am Schaft 3.3 gehalten.

Auf dem Schaft 3.3 des Kugelzapfens 3 ist ein hülsenförmiges Verbindungselement 5 beispielsweise aufgespritzt oder durch eine Pressverbindung befestigt. Dabei umfasst das Verbindungselement 5 den Schaft 3.3 auf seiner gesamten Länge. Das dem Gehäuse 1 zugewandte Ende 5.1 des Verbindungselementes 5 reicht bis an den Übergangsbereich 3.2 des Kugelzapfens 3 heran und weist im Querschnitt gesehen annähernd ein L-förmiges, zum Gehäuse 1 hin offenes Profil auf. Dieses L-förmige Profil besitzt einen annähernd radial zur Mittellinie M des Kugelzapfens 3 verlaufenden Radialschenkel 5.2 und einen annähernd koaxial sowie zu diesem beabstandet verlaufenden Axialschenkel 5.3. Der Dichtungsbalg 4 liegt mit seinem am Außendurchmesser des Kugelzapfen 3 mittels Spannring 4.3 gehaltenen Dichtungsbalgrand 4.2 an der Innenkontur des L-förmigen Endes 5.1 des Verbindungselementes 5 an. Dabei befindet sich eine über dem Spannring 4.3 vorhandene Materialwulst des Dichtungsbalgrandes 4.2 in axialer Richtung abdichtend an dem Radialschenkel 5.2 des Verbindungselementes 5 und in radialer Richtung am Axialschenkel 5.3. Letzterer steht hierbei über den Dichtungsbalgrand 4.2 vor und dient als Tropfkante. Auf diese Weise liegt der Dichtungsbalgrand 4.2 gleichzeitig am Schaft 3.3 des Kugelzapfens 3 und an dem Radialschenkel 5.2 und dem Axialschenkel 5.3 des Verbindungselementes 5 an.

Der Dichtungsbalg 4 weist zwischen den Dichtungsbalgrändern 4.1 und 4.2 einen Mantelbereich auf, der eine erste, sich an den gehäuseseitigen Dichtungsbalgrand 4.1 anschließende, vom Kugelzapfen 3 weg gerichtete Ausstülpung A1 sowie eine weitere, sich an den schaftseitigen Dichtungsbalgrand 4.2 anschließende, vom Kugelzapfen 3 weg gerichtete Ausstülpung A2 besitzt. Dabei ist gemäß der Erfindung der radiale Abstand r1 der ersten Ausstülpung A1 zur Mittelachse M des Kugelzapfens 3 größer als der radiale Abstand r2 der zweiten Ausstülpung A2 zur Mittelachse M. Er ist auch größer als der radiale Abstand r3 der Außenwand des Gehäuses 1 im Punkt der Befestigung des gehäuseseitigen Dichtungsbalgrandes 4.1. In axialer Richtung des Kugelzapfens 3 gesehen befindet sich die erste Ausstülpung A1 des Dichtungsbalges 4 annähernd auf der Höhe des dem Schaft 3.3 zugewandten Randbereiches 1.1 des Gehäuses 1, wobei sie annähernd U-förmig ausgebildet ist mit in Richtung zum Kugelzapfen 3 geöffneten Schenkeln.

Das bedeutet, dass sich die den größten radialen Abstand r1 zur Mittelachse M des Kugelzapfens 3 aufweisende Ausstülpung A1 an einer Stelle innerhalb der Baugruppe befindet, an der der Abstand zu benachbarten Bauteilen und damit auch die Bewegungsfreiheit am größten ist.

Da das mit seinem kugel- bzw. gehäuseabgewandten Ende 5.4 über den Schaft 3.3 des Kugelzapfens 3 hinausragende Verbindungselement 5 eine integrierte Montagehilfe 6 besitzt, die außen oder innen (z.B. ein Innensechskant) angeordnet sein kann, ist auch eine einfache Handhabung bei der Montage möglich.

Des Weiteren weist das vorzugsweise aus Stahl oder aus Kunststoff gefertigte Verbindungselement 5 eine an seinem Umfang angeordnete Ausnehmung 7 auf, über die eine hier nicht dargestellte Verdrehsicherung gegenüber dem Kugelzapfen 3 zur Wirkung kommt.

Eine zusätzliche Abdichtung erfährt das Kugelgelenk durch einen zwischen dem Verbindungselement 5 und dem Kugelzapfen 3 eingelegten Rundring 8.

Somit ermöglicht die erfindungsgemäße Abdichtung insbesondere für Kugelgelenke in stehender Einbaulage mit unten befindlicher Kugel 3.1, die zudem große Schwenk- und Drehbewegungen durchführen, eine zuverlässige Dichtheit sowohl in axialer Richtung über die Verbindungsstelle Dichtungsbalgrand 4.2/Radialschenkel 5.2 als auch in radialer Richtung über die Verbindungsstellen Dichtungsbalgrand 4.2/Kugelzapfen 3 sowie Dichtungsbalgrand 4.2/Axialschenkel 5.3. Der Axialschenkel 5.3 dient dabei als Schutz gegen das Eindringen von Feuchtigkeit und Schmutz in der Art einer Tropfkante.

Außerdem wirkt die große, den gesamten Schaft 3.3 des Kugelzapfens 3 umschließende, Anlagefläche des hülsenförmigen Verbindungselementes 5 mit dem Außendurchmesser des Schaftes 3.3 ebenfalls abdichtend zusammen.

Der bei der Absolvierung großer Winkelbewegungen extremen Stauch- und Dehnbelastungen ausgesetzte Dichtungsbalg 4 hat auf Grund der erfindungsgemäßen Ausbildung sowohl bei der Dehn- als auch bei der Stauchbewegung genügend Bewegungsfreiheit, da sich sein größter Umfang auf Höhe des Randbereiches 1.1 des Gehäuses 1 befindet und dadurch kaum durch benachbarte Flächen eingeschränkt und beschädigt werden kann.

Im Zusammenwirken des Verbindungselementes 5 mit dem Dichtungsbalg 4 ist somit eine zuverlässige Abdichtung insbesondere für axial verstellbare Kugelgelenke, die große Schwenk- und Drehwinkel absolvieren, entstanden.

## Patentansprüche

1. Abgedichtetes Kugelgelenk, welches ein Gehäuse (1) zur Aufnahme einer in einer Gleitschale (2) beweglich gelagerten Kugel (3.1) eines Kugelzapfens (3) sowie einen zwischen dem Gehäuse (1) und dem Kugelzapfen (3) angeordneten Dichtungsbalg (4) aufweist, dessen erster Dichtungsbalgrand (4.1) an dem Gehäuse (1) und dessen zweiter Dichtungsbalgrand (4.2) an dem Schaft (3.3) des Kugelzapfens (3) abdichtend anliegt, wobei der Dichtungsbalg (4) wenigstens eine, sich an den gehäuseseitigen Dichtungsbalgrand (4.1) anschließende, vom Kugelzapfen (3) weg gerichtete Ausstülpung (A1) aufweist und auf dem Schaft (3.3) des Kugelzapfens (3) ein festsitzendes und diesen hülsenförmig umschließendes Verbindungselement (5) angeordnet ist, **dadurch gekennzeichnet, dass** das Verbindungselement ein gehäuseseitiges, flanschartig ausgebildetes Ende (5.1) mit im Querschnitt gesehen annähernd einer in Richtung zum Gehäuse (1) geöffneten L-Form aufweist, an deren Innenkontur der am Schaft (3.3) des Kugelzapfens (3) befestigte Dichtungsbalgrand (4.2) abdichtend anliegt.

2. Kugelgelenk nach Anspruch 1, **dadurch gekennzeichnet, dass** das annähernd L-förmig ausgebildete Ende (5.1) des Verbindungselementes (5) aus einem annähernd koaxial zur Mittellinie (M) des Kugelzapfens (3) sowie zu diesem beabstandet in Richtung zum Gehäuse (1) verlaufenden Axialschenkel (5.3) und einem annähernd radial verlaufenden Radialschenkel (5.2) besteht.

3. Kugelgelenk nach Anspruch 1 oder 2, **dadurch gekennzeichnet, dass** eine über einem den Dichtungsbalgrand (4.2) auf dem Außendurchmesser des Schaftes (3.3) befestigenden Spannring (4.3) vorhandene Materialwulst in axialer Richtung an dem Radialschenkel (5.2) und in radialer Richtung an dem Axialschenkel (5.3) des Verbindungselementes (5) anliegt.

4. Kugelgelenk nach einem oder mehreren der Ansprüche 1 bis 3, **dadurch gekennzeichnet, dass** der Dichtungsbalg (4) wenigstens eine zweite, sich an den schaftseitigen Dichtungsbalgrand (4.2) anschließende, vom Kugelzapfen (3) weg gerichtete Ausstülpung (A2) aufweist, wobei der radiale Abstand (r1) der ersten Ausstülpung (A1) zur Mittelachse (M) des Kugelzapfens (3) größer ist als der radiale Abstand (r2) der zweiten Ausstülpung (A2) zur Mittelachse (M).

5. Kugelgelenk nach einem oder mehreren der Ansprüche 1 bis 4, **dadurch gekennzeichnet, dass** der radiale Abstand (r1) der ersten, gehäuseseitigen Ausstülpung (A1) zur Mittelachse (M) des Kugelzapfens (3) größer ist als der radiale Abstand (r3) der Außenwand des Gehäuses (1) im Punkt der Befestigung des gehäuseseitigen Dichtungsbalgrandes (4.1).

6. Kugelgelenk nach einem oder mehreren der Ansprüche 1 bis 5, **dadurch gekennzeichnet, dass** sich die erste Ausstülpung (A1) des Dichtungsbalges (4) in axialer Richtung des Kugelzapfens (3) gesehen annähernd auf der Höhe des dem Schaft (3.3) zugewandten Randbereiches (1.1) des Gehäuses (1) befindet.

7. Kugelgelenk nach einem oder mehreren der Ansprüche 1 bis 6, **dadurch gekennzeichnet, dass** die erste, gehäuseseitige Ausstülpung (A1) annähernd U-förmig ausgebildet ist mit in Richtung zum Kugelzapfen (3) geöffneten Schenkeln.

8. Kugelgelenk nach einem oder mehreren der Ansprüche 1 bis 7, **dadurch gekennzeichnet, dass** das Verbindungselement (5) mit seinem dem Gehäuse (1) abgewandten Ende (5.4) wenigstens bis zum gehäuseabgewandten Ende des Schaftes (3.3) des Kugelzapfens (3) reicht.

9. Kugelgelenk nach einem oder mehreren der Ansprüche 1 bis 8, **dadurch gekennzeichnet, dass** der Axialschenkel (5.3) des gehäuseseitigen Endes (5.1) des Verbindungselementes (5) als eine in Richtung zum Gehäuse (1) gekröpfte Tropfkante ausgebildet ist.

10. Kugelgelenk nach einem oder mehreren der Ansprüche 1 bis 9, **dadurch gekennzeichnet, dass** zwischen dem Verbindungselement (5) und dem Kugelzapfen (3) eine Pressverbindung besteht.

11. Kugelgelenk nach einem oder mehreren der Ansprüche 1 bis 9, **dadurch gekennzeichnet, dass** das Verbindungselement (5) auf den Kugelzapfen (3) aufgespritzt ist.

12. Kugelgelenk nach einem oder mehreren der Ansprüche 1 bis 11, **dadurch gekennzeichnet, dass** das Verbindungselement (5) auf seinem den Schaft (3.3) des Kugelzapfens (3) umgreifenden, hülsenartigen Umfang eine der Aufnahme einer Verdrehsicherung des Verbindungselementes (5) gegenüber dem Kugelzapfen (3) dienende Ausnehmung (7) aufweist.

13. Kugelgelenk nach einem oder mehreren der Ansprüche 1 bis 12, **dadurch gekennzeichnet, dass** das Verbindungselement (5) an seinem dem Gehäuse (1) abgewandten Ende (5.4) eine integrierte Montagehilfe (6) aufweist.

14. Kugelgelenk nach einem oder mehreren der Ansprüche 1 bis 13, **dadurch gekennzeichnet, dass** zwischen dem Außendurchmesser des Schaftes (3.3) des Kugelzapfens (3) und dem Innendurchmesser des Verbindungselementes (5) ein Rundring (8) als zusätzliche radiale Abdichtung angeordnet ist.

15. Kugelgelenk nach einem oder mehreren der Ansprüche 1 bis 14, **dadurch gekennzeichnet, dass** das Verbindungselement (5) aus Stahl besteht.

16. Kugelgelenk nach einem oder mehreren der Ansprüche 1 bis 14, **dadurch gekennzeichnet, dass** das Verbindungselement (5) aus Kunststoff besteht.

## Claims

1. A sealed ball-and-socket joint which comprises a housing (1) for receiving a ball (3.1) of a ball pivot (3) movably held in a sliding shell (2) as well as sealing bellows (4) which is arranged between the housing (1) and the ball pivot (3) and whose first sealing bellows edge (4.1) rests in a sealing manner on a housing (1) and whose second sealing bellows edge (4.2) rests in a sealing manner on the shaft (3.3) of the ball pivot (3), with the sealing bellows (4) comprising at least one protuberance (A1) which is adjacent to the sealing bellows edge (4.1) on the housing side and is averted from the ball pivot (3) and with a fixed connecting element (5) being arranged on the shaft (3.3) of the ball pivot (3) and enclosing the same in a sleeve-like manner, **characterized in that** the connecting element comprises an end (5.1) which is disposed at the housing side and has a flange-like end with the approximate form of an L as seen in the cross section which opens in the direction towards the housing (1), on the inner contour of which rests in a sealing manner the sealing bellows edge (4.2) fastened to the shaft (3.3) of the ball pivot (3).

2. A ball-and-socket joint as claimed in claim 1, **characterized in that** the end (5.1) of the connecting element (5) which is arranged approximately in the shape of an L consists of an axial leg (5.3) which extends approximately coaxially to the central line (M) of the ball pivot (3) and, at a distance from the same, in the direction towards the housing (1), and of an approximately radially extending radial leg (5.2).

3. A ball-and-socket joint as claimed in claim 1 or 2, **characterized in that** a material bulging present on a clamping ring (4.3) which fastens the bellows sealing edge (4.2) to the outside diameter of the shaft (3.3) rests in the axial direction on the radial leg (5.2) and in the radial direction on the axial leg (5.3) of the connecting element (5).

4. A ball-and-socket joint as claimed in one or several of the claims 1 to 3, **characterized in that** the sealing bellows (4) comprises at least one second protuberance (A2) which is adjacent to the bellows sealing edge (4.2) on the shaft side and which is averted from the ball pivot (3), with the radial distance (r1) of the first protuberance (A1) from the central axis (M) of the ball pivot (3) being larger than the radial distance (r2) of the second protuberance (A2) from the central axis (M).

5. A ball-and-socket joint as claimed in one or several of the claims 1 to 4, **characterized in that** the radial distance (r1) of the first protuberance (A1) on the housing side from the central axis (M) of the ball pivot (3) is larger than the radial distance (r3) of the outside wall of the housing (1) at the fastening point of sealing bellows edge (4.1) on the housing side.

6. A ball-and-socket joint as claimed in one or several of the claims 1 to 5, **characterized in that** the first protuberance (A1) of the sealing bellows (4) is situated, when seen in the axial direction of the ball pivot (3), approximately at the level of the edge zone (1.1) of the housing (1) facing the shaft (3.3).

7. A ball-and-socket joint as claimed in one or several of the claims 1 to 6, **characterized in that** the first protuberance (A1) on the housing side is provided with an approximately U-shaped arrangement with legs opening in the direction towards the ball pivot (3).

8. A ball-and-socket joint as claimed in one or several of the claims 1 to 7, **characterized in that** the connecting element (5) reaches with its end (5.4) averted from the housing (1) at least up to the end of the shaft (3.3) of the ball pivot (3) which is averted from the housing.

9. A ball-and-socket joint as claimed in one or several of the claims 1 to 8, **characterized in that** the axial leg (5.3) of the end (5.1) of the connecting element (5) on the housing end is arranged as a drop edge bent in the direction towards the housing (1).

10. A ball-and-socket joint as claimed in one or several of the claims 1 to 9, **characterized in that** there is a compression joint between the connecting element (5) and the ball pivot (3).

11. A ball-and-socket joint as claimed in one or several of the claims 1 to 9, **characterized in that** the connecting element (5) is injected onto the ball pivot (3).

12. A ball-and-socket joint as claimed in one or several of the claims 1 to 11, **characterized in that** the connecting element (5) is provided on its sleeve-like circumference enclosing the shaft (3.3) of the ball pivot (3) with a recess (7) which is used for receiving a torsion protection of the connecting element (5) relative to the ball pivot (3).

13. A ball-and-socket joint as claimed in one or several of the claims 1 to 12, **characterized in that** the connecting element (5) comprises an integrated mounting aid (6) at its end (5.4) averted from the housing (1).

14. A ball-and-socket joint as claimed in one or several of the claims 1 to 13, **characterized in that** a round ring (8) is arranged as an additional radial seal between the outside diameter of the shaft (3.3) of the ball pivot (3) and the inner diameter of the connecting element (5).

15. A ball-and-socket joint as claimed in one or several of the claims 1 to 14, **characterized in that** the connecting element (5) consists of steel.

16. A ball-and-socket joint as claimed in one or several of the claims 1 to 14, **characterized in that** the connecting element (5) consists of plastic.

## Revendications

1. Joint à rotule étanche comportant un boîtier (1) destiné à recevoir une pièce sphérique (3.1) logée mobile dans une coquille lisse (2) d'une rotule (3) ainsi qu'un soufflet d'étanchéité (4) disposé entre le boîtier (1) et la rotule (3), le premier bord (4.1) du soufflet d'étanchéité étant en appui étanche contre le boîtier (1) et le deuxième bord (4.2) du soufflet d'étanchéité, contre la queue (3.3) de la rotule (3), le soufflet d'étanchéité (4) comportant au moins une protubérance (A1) pointant dans la direction opposée à la rotule (3) et contiguë au bord (4.1) du soufflet d'étanchéité situé du côté du boîtier et un élément de liaison (5) fixe étant disposé sur la queue (3.3) de la rotule (3) qu'il enserre à la façon d'une gaine, **caractérisé en ce que** l'élément de liaison comporte, sur le côté du boîtier, une extrémité (5.1) conformée en forme de collerette de section approximativement en L ouvert sur le boîtier (1) et sur le contour interne duquel est en appui étanche le bord (4.2) du soufflet d'étanchéité solidarisé à la queue (3.3) de la rotule (3).

2. Joint à rotule selon la revendication 1, **caractérisé en ce que** l'extrémité (5.1), conformée approximativement en L, de l'élément de liaison (5) est constituée d'une branche axiale (5.3) qui s'étend approximativement coaxialement par rapport à la ligne médiane (M) de la rotule (3) à quelque distance de celle-ci en direction du boîtier (1) et d'une branche radiale (5.2) orientée approximativement radialement.

3. Joint à rotule selon la revendication 1 ou 2, **caractérisé en ce qu'**un bourrelet de matière qui est prévu au-dessus d'un anneau de serrage (4.3) fixant le bord (4.2) du soufflet d'étanchéité sur le diamètre extérieur de la queue (3.3) est en appui, dans la direction axiale, sur la branche radiale (5.2) et dans la direction radiale, sur la branche axiale (5.3) de l'élément de liaison (5).

4. Joint à rotule selon une ou plusieurs des revendications 1 à 3, **caractérisé en ce que** le soufflet d'étanchéité (4) comporte au moins une deuxième protubérance (A2) pointant dans la direction opposée à la rotule (3) et contiguë au bord (4.2) du soufflet d'étanchéité situé du côté de la queue, l'écartement radial (r1) entre la première protubérance (A1) et l'axe médian (M) de la rotule (3) étant supérieur à l'écartement radial (r2) entre la deuxième protubérance (A2) et l'axe médian (M).

5. Joint à rotule selon une ou plusieurs des revendications 1 à 4, **caractérisé en ce que** l'écartement radial (r1) entre la première protubérance (A1) située du côté du boîtier et l'axe médian (M) de la rotule (3) est supérieur à l'écartement radial (r3) entre la paroi externe du boîtier (1) et le point de fixation du bord (4.1) du soufflet d'étanchéité situé du côté du boîtier.

6. Joint à rotule selon une ou plusieurs des revendications 1 à 5, **caractérisé en ce que** la première protubérance (A1) du soufflet d'étanchéité (4) est située, vue dans la direction axiale de la rotule (3), environ à la hauteur de la zone (1.1) en bordure du boîtier (1) tournée vers la queue (3.3).

7. Joint à rotule selon une ou plusieurs des revendications 1 à 6, **caractérisé en ce que** la première protubérance (A1) située du côté du boîtier est conformée approximativement en un U dont les branches s'ouvrent sur la rotule (3).

8. Joint à rotule selon une ou plusieurs des revendications 1 à 7, **caractérisé en ce que** l'élément de liaison (5) a son extrémité (5.4) détournée du boîtier (1) qui s'étend au moins jusqu'à l'extrémité détournée du boîtier de la queue (3.3) de la rotule (3).

9. Joint à rotule selon une ou plusieurs des revendications 1 à 8, **caractérisé en ce que** la branche axiale (5.3) de l'extrémité (5.1) de l'élément de liaison (5) située du côté du boîtier est recourbée en direction du boîtier (1) de manière à former une gouttière.

10. Joint à rotule selon une ou plusieurs des revendications 1 à 9, **caractérisé en ce que** l'élément de liaison (5) et la rotule (3) sont réunis par emmanchement.

11. Joint à rotule selon une ou plusieurs des revendications 1 à 9, **caractérisé en ce que** l'élément de liaison (5) est surmoulé par injection sur la rotule (3).

12. Joint à rotule selon une ou plusieurs des revendications 1 à 11, **caractérisé en ce que** l'élément de liaison (5) comporte sur son pourtour en forme de gaine enserrant la queue (3.3) de la rotule (3) un évidement (7) servant à recevoir un organe destiné à empêcher le mouvement angulaire de l'élément de liaison (5) par rapport à la rotule (3).

13. Joint à rotule selon une ou plusieurs des revendications 1 à 12, **caractérisé en ce que** l'élément de liaison (5) comporte, à son extrémité (5.4) détournée du boîtier (1), un moyen d'assemblage (6) intégré.

14. Joint à rotule selon une ou plusieurs des revendications 1 à 13, **caractérisé en ce qu'**un anneau rond (8) faisant office de joint d'étanchéité radial complémentaire est disposé entre le diamètre extérieur de la queue (3.3) de la rotule (3) et le diamètre intérieur de l'élément de liaison (5).

15. Joint à rotule selon une ou plusieurs des revendications 1 à 14, **caractérisé en ce que** l'élément de liaison (5) est réalisé en acier.

16. Joint à rotule selon une ou plusieurs des revendications 1 à 14, **caractérisé en ce que** l'élément de liaison (5) est réalisé en matière plastique.
